# EUROPEAN PATENT APPLICATION

(11) **EP 3 660 542 A1**
(43) Date of publication of application: **03.06.2020**
(21) Application number: 18209079.5
(22) Date of filing: 29.11.2018
(51) Int. Cl.: G01T 1/16

(54) **HYBRID X-RAY AND OPTICAL DETECTOR**

(71) Applicant: Koninklijke Philips N.V., 5656 AG Eindhoven (NL)
(72) Inventor: JACOBS, Johannes Wilhelmus Maria, 5656 AE Eindhoven (NL); HOFSINK, Robert Derk Jan Hendrik, 5656 AE Eindhoven (NL); HENDRIKS, Bernardus Hendrikus Wilhelmus, 5656 AE Eindhoven (NL); HOLTHUIZEN, Ronaldus Frederik Johannes, 5656 AE Eindhoven (NL); RUETTEN, Walter, 5656 AE Eindhoven (NL)
(74) Representative: de Haan, Poul Erik

(57) **Abstract**

The present invention relates to an imaging detector. In order to provide a hybrid X-ray and optical detector with enhanced optical imaging capabilities and a simple design, an imaging detector is provided for capturing optical imaging data and X-ray imaging data. The imaging detector comprises a substrate, a photosensitive sensor, an X-ray scintillator, and an array of optical component arrangements. The photosensitive sensor comprises sensor pixels distributed across the imaging detector. The X-ray scintillator is configured to convert energy of incident X-ray radiation into optical photons. Each optical component arrangement comprises at least one optical component configured for directing incident optical radiation towards the photosensitive sensor. The sensor pixels comprise optical pixels, each coupled with a respective optical component arrangement to receive the incident optical radiation, thereby generating the optical imaging data. The sensor pixels comprise X-ray pixels coupled with the X-ray scintillator to receive the converted optical photons, thereby generating the X-ray imaging data.

## Description

### FIELD OF THE INVENTION

The present invention relates to an imaging detector, in particular the present invention relates to an imaging detector for capturing optical imaging data and X-ray imaging data, to an imaging system and to a method for fabricating an imaging detector.

### BACKGROUND OF THE INVENTION

The integration of optical imaging in X-ray imaging system can provide valuable functional information in various medical and non-medical applications. In medical applications, for example, such dual-imaging systems are mostly built in a gantry in which separate optical and X-ray image acquisition channels are mechanically combined, and acquired images are co-registered and fused together. Since the X-ray and optical images are not acquired at the same time and place, this imaging concept often results in imaging inaccuracies and imaging artefacts resulting from differences in acquisition time and patient movement. This problem may be solved by a hybrid X-ray and optical detector. Current hybrid X-ray and optical detectors may have limited optical functionalities and complex interconnections between numerous optical sensor segments. For example, WO 2016/131647 A1 describes a hybrid X-ray and optical detector built from an X-ray detector by interleaving numerous optical sensor segments in a common imaging area.

### SUMMARY OF THE INVENTION

There may be a need to provide a hybrid X-ray and optical detector with enhanced optical imaging capabilities and a simple design.

The object of the present invention is solved by the subject-matter of the independent claims, wherein further embodiments are incorporated in the dependent claims. It should be noted that the following described aspects of the invention apply also for the imaging detector, the imaging system and the method for fabricating an imaging detector. A first aspect of the invention relates to an imaging detector for capturing optical imaging data and X-ray imaging data. The imaging detector comprises a substrate, a photosensitive sensor, an X-ray scintillator, and an array of optical component arrangements. The photosensitive sensor comprises sensor pixels distributed across the imaging detector. The X-ray scintillator is configured to convert energy of incident X-ray radiation into optical photons. Each optical component arrangement comprises at least one optical component configured for directing incident optical radiation towards the photosensitive sensor. The sensor pixels comprise optical pixels, each coupled with a respective optical component arrangement to receive the incident optical radiation, thereby generating the optical imaging data. The sensor pixels comprise X-ray pixels coupled with the X-ray scintillator to receive the converted optical photons, thereby generating the X-ray imaging data.

In other words, a common photosensitive sensor may be used on which X-ray scintillator, either pixelated or continuous, and optical components are arranged thereon. The distribution and properties of "X-ray pixels" and "optical pixels" across the detector area can flexibly be chosen and optimized for a specific hybrid imaging application, as will be explained hereafter in more detail. A manufacturing concept derived from the rapidly emerging "microLED" display technology may be used for fabricating the imaging detector.

The term "array" maybe understood as a one-dimensional array or two-dimensional array.

The X-ray scintillator may be a pixelated scintillator or a continuous scintillator (or non-pixelated scintillator).

The optical component arrangement may comprise one or more optical components configured for directing incident optical radiation 26 towards the photosensitive sensor. The optical components may comprise e.g. microlens, spectral filters, one-way or semi-transparent mirrors, light guides, polarizers, diffraction gratings, gradient index lens, holographic components, optical collimators like a longish tube or cuboid, and microprisms. Besides, switchable elements, such as liquid crystal lens, liquid lens based on water and oil, or transflective liquid crystal mirror may also be used as optical components.

The photosensitive sensor maybe configured for the intended hybrid imaging application. Typical examples of sensors are: a CMOS image sensor on a wafer-scale silicon substrate, a backplane array of amorphous Si TFT and photodiode pixels on a glass substrate or on a polyimide foil substrate, and a backplane array of organic TFT and photodiode pixels on a polyimide foil substrate. Large-FOV sensors can be realized by tiling multiple smaller sensors (e.g. CMOS) together. Design of X-ray pixels and optical pixels (and their photodiodes), should match with properties of the X-ray scintillator and optical components, respectively.

An optical pixel may comprise one or more photodiodes (not shown), each coupled to one or more (stacked) optical components, e.g. microlens, light guide, optical filter. At least two optical pixels may be assigned to one sensor pixel, each optical pixel thus forming a sub-pixel of the sensor pixel. Alternatively, at least two sensor pixels are assigned to one optical pixel, each sensor pixel thus forming a sub-pixel of the optical pixel. This may be advantageous for the requirement of a dynamic differentiation or resolution for optical imaging.

An X-ray pixel may comprise one or more photodiodes, each coupled to one or more (stacked) X-ray scintillator elements. At least two X-ray pixels may be assigned to one sensor pixel, each X-ray pixel thus forming a sub-pixel of the sensor pixel. Alternatively, at least two sensor pixels are assigned to one X-ray pixel, each sensor pixel thus forming a sub-pixel of the X-ray pixel. This may be advantageous for the requirement of a dynamic differentiation or resolution for X-ray imaging.

Any desired size and shape of X-ray pixels and optical pixels may be designed. Also pixels can be grouped to form an "X-ray sensor segment" or an 'optical sensor segment" in the detector field of view. In this way any optimal distribution of X-ray pixels and optical pixels across the common sensor array can be arranged for a specific imaging application. Examples are: interleaved individual pixels, interleaved sensor segments, alternating pixel lines, alternating sensor segment stripes, concentric circular (or rectangular) sensor segments, checker boards of sensor segments, and peripheral sensor segments.

According to an embodiment of the invention, at least one optical component arrangement comprises a light converging component for focusing or narrowing the incident optical radiation onto the photosensitive sensor. The light converging component is at least one selected from a microlens and an optical collimator.
The term "optical collimator" as used herein may be described as an optical component that focuses or narrows a light beam to be aligned in a different direction or reduce its cross section. For example, the optical collimator may be a longish tube or cuboid on top of the optical pixel which restricts the acceptance angle of the optical pixel.

The use of light converging components, such as microlenses or optical collimators, optionally combined with light guides, optical filters and/or lights sources advantageously enables the realization of a desired optical imaging capability. Examples are: large-field viewing, autostereoscopic imaging, three-dimensional light field imaging, time-of-flight imaging, three-dimensional light detection and ranging (LIDAR) imaging, hyperspectral imaging, and optical tomography.

According to an embodiment of the invention, the X-ray scintillator is a pixelated scintillator comprising an array of scintillator elements. The array of optical component arrangements and the array of scintillator elements are positioned with respect to each other for directing the incident optical radiation to the sensor pixels within a gap between the scintillator elements, thereby forming separate optical and X-ray pixels. Alternatively, the array of optical component arrangements and the array of scintillator elements are positioned with respect to each other for directing the incident optical radiation to the sensor pixels coupled with the X-ray scintillator, thereby forming common optical and X-ray pixels.

Thus, the present invention may offer the option to design separate sensor pixels for optical and X-ray images and hence can deliver both images simultaneously without special requirements for lighting or shutter movement, or image corrections to eliminate crosstalk between optical and X-ray images.

The present invention may offer an alternative option to design common or shared sensor pixels for optical and X-ray images. This option may be suitable to optimize properties of the hybrid detector for time-interleaved X-ray and optical imaging. Optical switches, such as a liquid crystal module, may be applied to switch its optical properties synchronously with time-interleaved X-ray and optical imaging.

According to an embodiment of the invention, at least one component arrangement comprises a light guide arranged inside the gap between the scintillator elements. The light guide is coupled with a respective light converging component for guiding the incident optical radiation towards the sensor pixels within the gap between the scintillator elements.

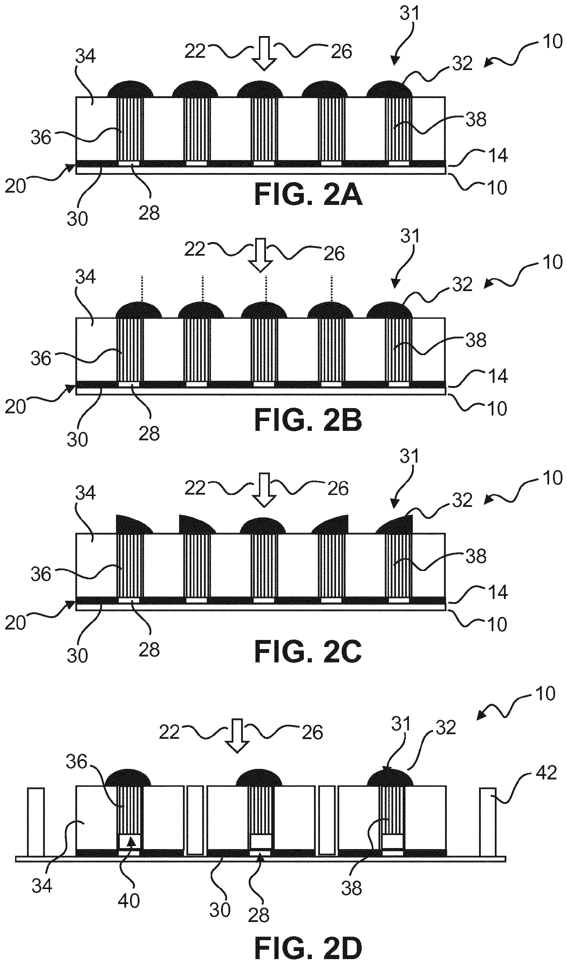

According to an embodiment of the invention, the light converging component is a microlens. The microlens has at least one of the following shapes and positions:
i) symmetrically shaped microlens in a symmetrical position relative to a respective light guide,
ii) symmetrically shaped microlens in an asymmetrical position relative to a respective light guide, and
iii) asymmetrically shaped microlens. This will be explained in more detail in the text of the embodiments of Figs. 2A to 2C.

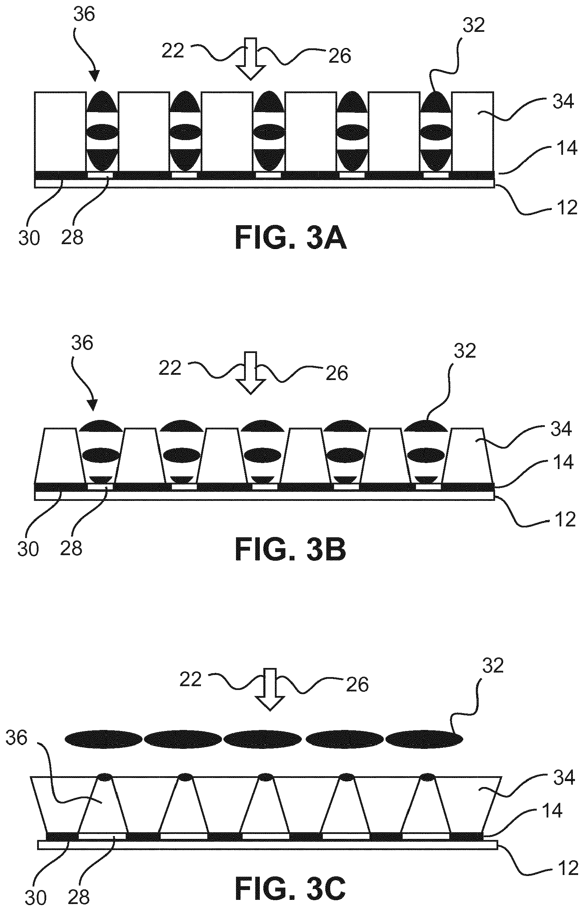

According to an embodiment of the invention, the microlens is a composite microlens. A position of the composite microlens is at least one of the following:
i) inside a gap between scintillator elements,
ii) inside a gap between trapezoid-shaped scintillator elements, and
iii) over a gap between trapezoid-shaped scintillator elements. This will be explained in more detail in the text of the embodiments of Figs. 3A to 3C.

According to an embodiment of the invention, the array of optical component arrangements and the array of scintillator elements are arranged on opposite sides of the photosensitive sensor. The photosensitive sensor is photosensitive on both sides. Each optical component arrangement is configured to direct the incident optical radiation towards one or more X-ray pixels coupled with a respective scintillator element. Alternatively, the array of optical component arrangements and the array of scintillator elements are arranged on the same side of photosensitive sensor. Each optical component arrangement is configured to direct the incident optical radiation passing through a respective scintillator element towards one or more X-ray pixels. Alternatively, at least one scintillator element has a surface shape that is configured in such a way that the at least one scintillator element itself acts as a microlens for optical imaging.

According to an embodiment of the invention, the array of scintillator elements comprises scintillator elements with:
i) different thicknesses,
ii) different sizes between scintillator elements,
iii) different sizes compared to that of the sensor pixel,
iv) different distance gaps,
v) non-uniform distribution,
vi) different radiation conversion materials, and/or
vii) different composition of radiation conversion materials. The composition of the radiation conversion material is different at least in one of the following:
   a doping level of the radiation conversion material, a doping material, and a combination of doping material.

In an example, a center region of the imaging detector may have a thicker scintillator elements, whereas a non-center, e.g. periphery region, of the imaging detector may have thinner scintillator elements.

In an example, the size of scintillator elements increases from center towards periphery, thereby resulting in high spatial resolution in center and low resolution at periphery, while saving material costs of electronics.

In an example, at least two scintillator elements are assigned to one sensor pixel. Each scintillator element is coupled with a photodiode and forms an X-ray subpixel of one sensor pixel. A composition of the radiation material and/or a thickness of the radiation material may be varied between the at least two X-ray subpixels assigned to one sensor pixel. This may be used in applications like high contrast images of medical tissue of objects with very large difference in the material X-ray absorption characteristics. In an example, at least two sensor pixels are assigned to one scintillator element. In other words, the scintillator element has a size larger than that of the sensor pixel.

In an example, a center region of the imaging detector may have a high-quality, expensive radiation conversion material, such as CsI, whereas a non-center, e.g. periphery region of the imaging detector may have a low-quality, cheap radiation conversion material, e.g. GOS.

In an example, the non-uniform distribution of the array of scintillator elements is a non-uniform distribution of the composition and/or thickness of the radiation conversion material of the scintillator elements.

In an example, the non-uniform distribution of the array of scintillator elements may be provided by a non-uniform distribution of level of pixel binning, for example 1x1, 2x2, 3x3 to 4x4 binning from a center region towards a periphery of the detector, or in general n x m binning with increasing n, m.

In an example, a center region of the imaging detector may have smaller distance gaps, whereas a non-center, e.g. periphery region, of the imaging detector may have a larger distance gaps, thereby resulting in high spatial resolution in center and low resolution at periphery, while saving material costs of electronics.

According to an embodiment of the invention, the X-ray scintillator is a continuous scintillator comprising a radiation conversion material.

According to an embodiment of the invention, at least one microlens is configured to be an optical filter for selectively transmitting light of different wavelengths.

In other words, the microlens itself can also act as an optical filter. For example, a composite microlens comprises an embedded optical filter. This may be useful in fluorescent image guided surgery for real-time visualization of tissue colored by a fluorescent dye, such as FDA-approved IndoCyanine Green (ICG). The surgeon can then work in normal room light conditions, whereas a narrow-bandwidth spectral filter in the microlens blocks largely the room light and transmits largely the light emitted by the dye. In the same way, a light guide can also act as optical filter.

According to an embodiment of the invention, a transflective optical mirror is provided. The transflective optical mirror is provided as an array of light filters, each light filter configured for blocking one or more X-ray pixels from receiving the incident optical radiation. Alternatively or additionally, the transflective optical mirror is provided as an array of optical switches, each configured for enabling the incident optical radiation received by one or more X-ray pixels to be selectively switched-on and -off synchronously with time-interleaved X-ray and optical imaging.

In an example, the transflective optical mirror is a transflective optical coating.

The use of a transflective optical mirror as optical switches may advantageously solve the problems associated with traditional optical shutters, such as correction with a light-only image to retrieve X-ray image, turning off the light (including room light) or closing a (large) optical shutter when acquiring an X-ray image.

This may advantageously enable real-time medical (e.g. in surgical, operating theater (OR)/hybrid or interventional rooms) and real-time non-medical imaging applications.

According to an embodiment of the invention, the array of optical component arrangements comprises microlenses with:
i) different focal lengths,
ii) different distance gaps;
iii) non-uniform distribution;
iv) different sizes between microlenses, and/or
v) different sizes compared to that of the sensor pixel.

The non-uniform distribution of the array of microlenses may be a non-distribution of focal lengths or sizes of the microlenses.

In an example, the non-uniform distribution of microlens may be provided by a non-uniform distribution of level of pixel binning, for example from 1x1, 2x2, 3x3 to 4x4 pixel binning from a center region towards a periphery of the detector.

In an example, at least two microlenses are assigned to one sensor pixel, each forming an optical subpixel. A focal length and/or a size may be varied between the at least two optical subpixels assigned to one sensor pixel.

In another example, at least two sensor pixels are assigned to one microlens.

In an example, the microlenses have an increasing size from center towards edges.

In an example, the microlenses have an increasing distance gap from center towards edges.

According to an embodiment of the invention, the substrate comprises a flat or a substantially flat or a curved shape. The substrate comprises silicon, glass or polymer foil.

The term "substantially flat" may be understood as a flatness comprising a minimum bend radius of up to 1 cm.

A second aspect of the invention relates to an imaging system. The imaging system comprises an imaging detector according to any one of the embodiments described above and below, an X-ray source and an optical source. The X-ray source is configured to provide X-ray radiation. The optical source is configured to provide optical radiation. The imaging detector is configured to detect the X-ray radiation to generate X-ray imaging data and to detect the optical radiation to generate optical imaging data.

A third aspect of the invention relates to a method for fabricating an imaging detector. The method comprises the following steps: a) forming a substrate, b) forming a photosensitive sensor on the substrate, and c) arranging an X-ray scintillator and/or an array of optical component arrangements on the photosensitive sensor and/or on the substrate layer by a pick-and-place assembly transfer process.

The detector assembly process may start with separate fabrication of pixelated "donor arrays", i.e. processing a bulk scintillator substrate into an array of scintillator pieces, and manufacturing and dicing of optical microstructures on a substrate into an array of optical imaging components (e.g. microlenses on wafer, optical filters on foil). Subsequently, these donor arrays are poised for pick up and transfer of the individual pieces to an "acceptor array". This is the common photosensitive sensor on which the heterogeneous integration of all X-ray and optical imaging components to a hybrid detector occurs.

According to an aspect of the invention, an imaging detector for capturing X-ray imaging data and optical imaging data is provided. The imaging detector is characterized by a common photosensitive sensor comprising multiple photosensitive pixels and electronic circuitry for the purpose of capturing and processing images resulting from exposure to X-ray radiation and/or optical radiation.The optical radiation may be ultravioulet (UV), visible (VIS), infrared (IR), or near infrared (NIR) light. This may eliminate interconnection problems for the optical sensor components. It may also offer enhanced optical imaging capabilities, and it may reduce cost price of the detector. Realization of this simpler, more flexible and cheaper hybrid detector design may be enabled by the manufacturing assembly concept of rapidly emerging MicroLED displays.

These and other aspects of the present invention will become apparent from and be elucidated with reference to the embodiments described hereinafter.

### BRIEF DESCRIPTION OF THE DRAWINGS

A more complete appreciation of the invention and the attendant advantages thereof will be more clearly understood by reference to the following schematic drawings, which are not to scale, wherein:
Fig. 1 shows a schematic diagram of an imaging detector according to an embodiment of the invention.
Figs. 2A to 2D show a schematic diagram of an imaging detector according to an embodiment of the invention.
Figs. 3A to 3C shows a schematic diagram of an imaging detector according to further embodiments of the invention.
Fig. 4 shows a schematic diagram of an imaging detector according to a further embodiment of the invention.
Fig. 5A to 5C show a schematic diagram of an imaging detector according to further embodiments of the invention.
Figs. 6A and 6B show a schematic diagram of an imaging detector according to a further embodiment of the invention.
Fig. 7A and 7B show a schematic diagram of an imaging detector according to further embodiments of the invention.
Fig. 8 shows a schematic diagram of an imaging system according to an embodiment of the invention.
Fig. 9 shows a schematic diagram of a method for fabricating an imaging detector according to an embodiment of the invention.

### DETAILED DESCRIPTION OF EMBODIMENTS

The illustration in the drawings is schematically and not to scale. In different drawings, similar or identical elements are provided with the same reference numerals. Generally, identical parts, units, entities, or steps are provided with the same reference symbols in the figures.

In the drawings, each embodiment shows schematically six X-ray pixels and three to six optical pixels, but these pixels are not necessarily adjacent. They may be distributed in any desired configuration across the imaging detector.

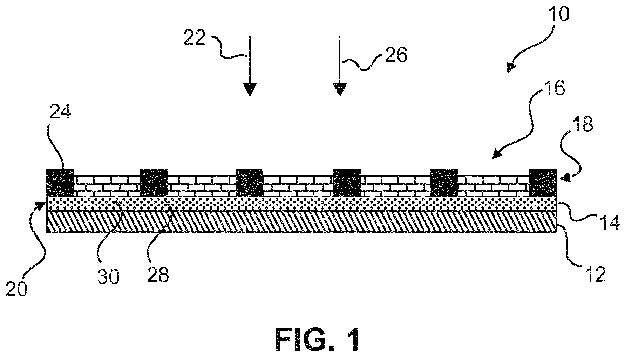

Fig. 1 shows a schematic diagram of an imaging detector 10 according to an embodiment of the invention. The imaging detector 10 comprises a substrate 12, a photosensitive sensor 14, an X-ray scintillator 16, and an array of optical component arrangements 18. The photosensitive sensor 14 comprises sensor pixels 20 distributed across the imaging detector 10. The X-ray scintillator 16 is configured to convert energy of incident X-ray radiation 22 into optical photons. Each optical component arrangement 18 comprises at least one optical component 24 configured for directing incident optical radiation 26 towards the photosensitive sensor 14. The sensor pixels 20 comprise optical pixels 28, each coupled with a respective optical component arrangement 18 to receive the incident optical radiation 26, thereby generating the optical imaging data. The sensor pixels 20 comprise X-ray pixels 30 coupled with the X-ray scintillator 16 to receive the converted optical photons, thereby generating the X-ray imaging data.

In an example, the substrate 12 comprises a flat or a substantially flat shape. In a further example, the substrate 12 comprises a curved shape. A curved detector may be useful in various situations, e.g. design of a compact X-ray, computed tomography (CT) or cone beam computed tomography (CBCT) imaging system, or imaging curved body parts. Examples are breast imaging or a flexible detector blanket (partly) covering a patient and/or in contact with a patient. The curved detector may also be useful for inspection (NDT) of industrial pipelines (gas, oil, water). The substrate 12 may comprise silicon, glass or polymer foil. The substrate with polymer foil may be enabled for example by sensor-on-foil technology.

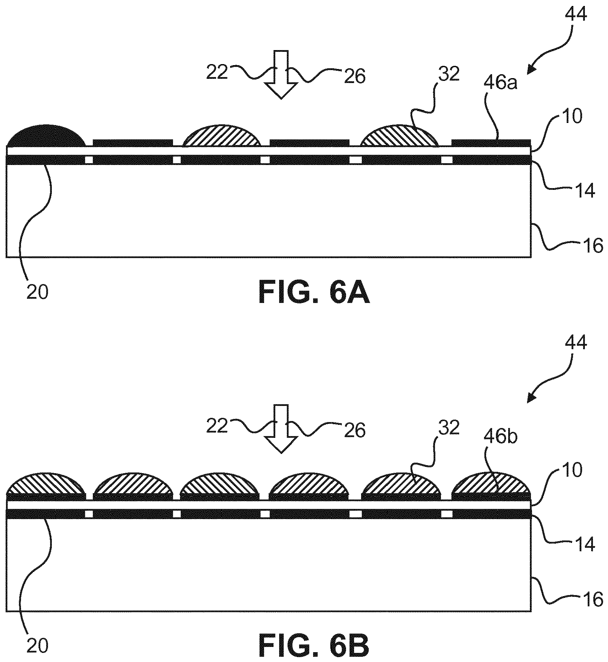

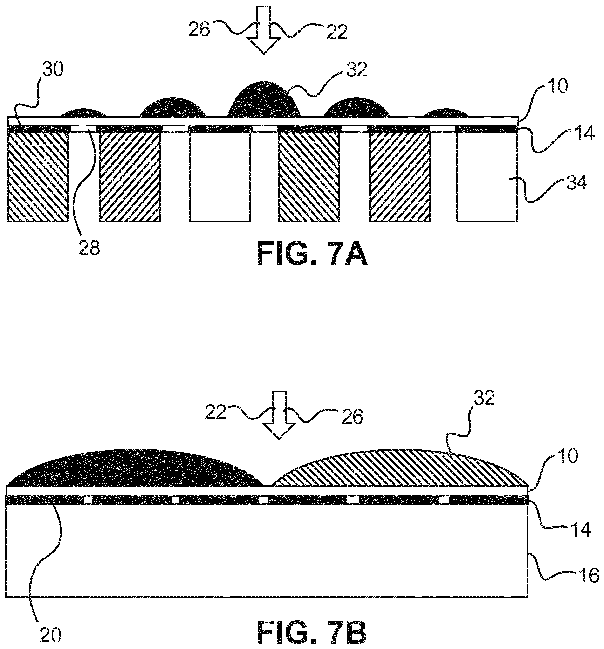

The X-ray scintillator 16 may be a pixelated scintillator or a continuous scintillator. In an example, as shown in Figs. 1 to 5 and 7A, the X-ray scintillator 16 is a pixelated scintillator. In an example, as shown in Figs. 6 and 7B, the X-ray scintillator 16 is a continuous scintillator.

In an example, at least one optical component arrangement comprises a light converging component 31 (shown in Figs. 2 to 7) for focusing or narrowing the incident optical radiation 26 onto the photosensitive sensor 14. The light converging component 31 is at least one selected from a microlens 32 and an optical collimator (not shown). For simplicity, the light converging component 31 in Figs. 2 to 7 is exemplified and illustrated as a microlens 32. It will be appreciated that in some implementations the light converging element 31 may be an optical collimator, such as a longish tube or cuboid. For example, optical collimators may also be applied, instead of or addition to, the microlens 32 in Figs. 2 to 7.

In an example, as shown in Figs. 1 to 4 and Fig. 7A, the X-ray scintillator 16 is a pixelated scintillator comprising an array of scintillator elements 34. The array of optical component arrangements 18 and the array of scintillator elements 34 are positioned with respect to each other for directing the incident optical radiation 26 to the sensor pixels 20 within a gap 36 between the scintillator elements 34, thereby forming separate optical and X-ray pixels.

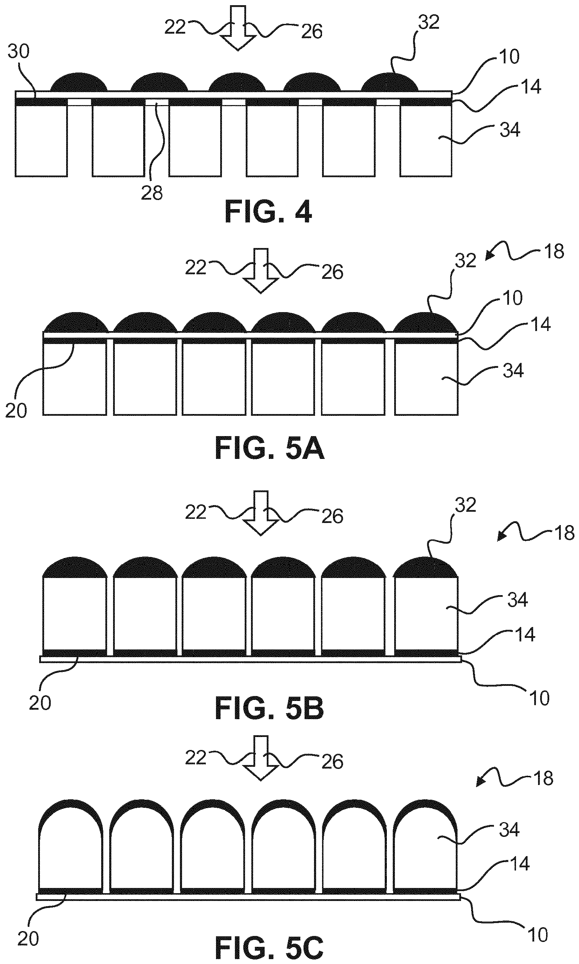

In an example, as an alternative concept, the array of optical component arrangements 18 and the array of scintillator elements 34 are positioned with respect to each other for directing the incident optical radiation 26 to the sensor pixels 20 coupled with the X-ray scintillator 16, thereby forming common optical and X-ray pixels. This concept is shown in Figs. 5A to 5C.

Figs. 2A to 2D shows a schematic diagram of an imaging detector 10 according to an embodiment of the invention. In Figs. 2A to 2D, at least one component arrangement 18 comprises a light guide 38 arranged inside the gap 36 between the scintillator elements 34. The light guide 38 is coupled with a respective light converging component 31 for guiding the incident optical radiation 26 towards the sensor pixels 20 within the gap 36 between the scintillator elements 34. For simplicity, the incident optical radiation 26 and the incident X-ray radiation 22 are illustrated as one arrow. The light converging component 31 may be a microlens 32.

In an example, as shown in Fig. 2A, the microlens 32 is a symmetrically shaped microlens in a symmetrical position relative to a respective light guide 38. In an example, as shown in Fig. 2B, the microlens 32 is a symmetrically shaped microlens in an asymmetrical position relative to a respective light guide 38. In this example, the position of a symmetrical microlens relative to the light guide and underlying photodiode may be optimized per location on the sensor area to ensure maximum collection of incident light for each viewing angle.

In an example, as shown in Fig. 2C, the microlens 32 is an asymmetrically shaped microlens. In this example, the shape of an asymmetrical microlens relative to the light guide and underlying photodiode may be optimized per location on the sensor area to ensure maximum collection of incident light for each viewing angle.

Optionally, optical filters and/or lights sources may be provided to advantageously enable the realization of a desired optical imaging capability.

In an example, as shown in Fig. 2D, a light filter 40 is provided. The application of different filters in adjacent optical pixels may advantageously enable hyperspectral imaging of tissue. Visibility of tumor tissue in an oncology surgery procedure can be enhanced by using different contrasts of optical images in specific wavelength bands. The light filter 40 may be applied at different positions. The light filter 40 may also be applied in the layer, underneath or above the microlens 32 or the light guide 38.

Optionally, at least one microlens 32 is configured to be an optical filter for selectively transmitting light of different wavelengths. In other words, the microlens itself can also act as an optical filter. For example, a composite microlens in Figs. 3A to 3C may comprise an embedded optical filter. Optionally, the light guide 38 is configured to be an optical filter for selectively transmitting light of different wavelengths.

In an example, as shown in Fig. 2D, a light source 42 is provided in periphery and/or in the gaps 36 of the X-ray scintillator 16. The application of small light-sources, such as microLED's or vertical-cavity surface-emitting laser (VCSEL)'s at the periphery and/or inside the gaps of the X-ray scintillator may advantageously enable three-dimensional or multi-spectral imaging capabilities of the hybrid detector. For example, light sources can be configured to emit light pulses at different wavelengths synchronized with pulsed X-ray exposures of the patient in order to enable time-interleaved hybrid imaging. This means that successive light images and X-ray images are acquired rapidly after each other. Light sources can be used to add advanced three-dimensional sensing functionalities, such as an anti-collision system, to the detector by using time-of-flight (ToF) or LIDAR techniques. Various examples from consumer electronics (e.g. Kinect motion sensing, IphoneX three dimensional light camera, ToF proximity sensors, etc.) can also be used in a hybrid detector. The light sources can be used to realize dedicated illumination functions, independent of imaging or sensing. Useful examples for a surgeon in an Operating Room (OR) environment can be the generation of shadow-free lighting and the projection of relevant information on the patient (e.g. entry point for insertion of a surgical needle).

The combination of multiple light sources over a large surface (the detector) optionally combined with optical components to focus the light enables a surgical light with excellent shadow dilution properties. This enables using the detector in a surgical setting such as a Hybrid OR during the surgical procedure.

Figs. 3A to 3C show a schematic diagram of an imaging detector 10 according to further embodiments of the invention. In Figs. 3A to 3C, the microlens 32 is a composite microlens comprising a set of microlenses. In view of the X-ray scintillator thickness ranging from 100 to 1000 µm, a composite microlens may be useful to prevent light loss due to reflection/absorption phenomena in the gap between adjacent scintillator elements. In an example, as shown in Fig. 3A, the position of the composite microlens is inside a gap 36 between scintillator elements 34.

In an example, as shown in Fig. 3B, the position of the composite microlens is inside a gap 36 between trapezoid-shaped scintillator elements 34. This may advantageously enable an increase of optical viewing angle and optical sensitivity compared to the example in Fig. 3A. The microlens needs to have a symmetric shape and may be tilted towards the boundary of the sensor to optimal correct for the oblique entrance of the optical beams.

In an example, as shown in Fig. 3C, the position of the composite microlens is over a gap 36 between trapezoid-shaped scintillator elements 34. This may advantageously enable an increase of X-ray sensitivity, while still maintaining a reasonable viewing angle and optical sensitivity compared to the example in Fig. 3A. This may be realized by using an elevated design of the microlens (e.g. in a hexagonal pixel structure) above the scintillator layer.

Fig. 4 shows a schematic diagram of an imaging detector 10 according to a further embodiment of the invention. In Fig. 4, the array of optical components 18 and the array of scintillator elements 34 are arranged on opposite sides of the photosensitive sensor 14. The photosensitive sensor 14 is photosensitive on both sides. The array of optical component arrangements 18 and the array of scintillator elements 34 are positioned with respect to each other for directing the incident optical radiation 26 to the optical pixels 28 within a gap 36 between the scintillator elements 34. In this example, the sensor has dedicated sensor pixels for X-ray imaging and optical imaging, i.e. separate X-ray pixels 30 and optical pixels 28. This embodiment may advantageously increase flexibility in the choice of optical components and facilitate the manufacturing assembly process.

Figs. 5A to 5C show a schematic diagram of an imaging detector 10 according to further embodiments of the invention.

In an example, as shown in Fig. 5A, the array of optical component arrangements 18 and the array of scintillator elements 34 are arranged on opposite sides of the photosensitive sensor 14. The photosensitive sensor 14 is photosensitive on both sides. Each optical component arrangement 18 is configured to direct the incident optical radiation 26 towards one or more sensor pixels 20 coupled with a respective scintillator element 34. This may be suitable to optimize properties of the hybrid detector for time-interleaved X-ray and optical imaging.

In an example, as shown in Fig.5B, the array of optical component arrangements 18 and the array of scintillator elements 34 are arranged on the same side of photosensitive sensor. Each optical component arrangement 18 is configured to direct the incident optical radiation 26 passing through a respective scintillator element 34 towards one or more sensor pixels 20 . This may be suitable to optimize properties of the hybrid detector for time-interleaved X-ray and optical imaging.

In an example, as shown in Fig. 5C, at least one scintillator element 34 has a surface shape that is configured in such a way that the at least one scintillator element 34 itself acts as a microlens for optical imaging. The adjusted scintillator surface shapes may have small impact on X-ray absorption differences of pixels. These will be taken into account by the standard gain correction of X-ray images.

In an example (not shown), the array of scintillator elements 34 of the embodiments in Figs. 1 to 5 comprises scintillator elements 34 with: i) different thicknesses, ii) different sizes between scintillator elements, iii) different sizes compared to that of the sensor pixel, iv) different distance gaps, v) non-uniform distribution, vi) different radiation conversion materials, and/or vii) different composition of radiation conversion materials. The composition of the radiation conversion material is different at least in one of the following: a doping level of the radiation conversion material, a doping material, and a combination of doping material. This may advantageously enable a dynamic differentiation or resolution for an X-ray or a CT detector.

For example, an imaging detector with a large variation of different dedicated scintillator material across the continuous scintillator may be used in applications like tissue differentiation, material detection and separation, or measurements of X-ray tube characteristics, for instance an X-ray spot size, or an X-ray spectrum, of an X-ray tube of a CT imaging system.

For example, an imaging detector with a combination of small and large X-ray scintillator elements within one sensor pixel may be used in applications like high contrast images of medical tissue or objects with very large differences in material X-ray absorption characteristics.

Figs. 6 show a schematic diagram of an imaging detector 10 with a continuous scintillator according to a further embodiment of the invention. The continuous scintillator comprises a radiation conversion material.

In an example, as shown in Figs. 6A and 6B, a transflective optical mirror 44 is provided.

In an example, as shown in Fig. 6A, the transflective optical mirror 44 is provided as an array of light filters 46a. Each light filter 46a is configured for blocking one or more X-ray pixels from receiving the incident optical radiation 26. These X-ray pixels can thus receive X-ray only and are dedicated for generating X-ray imaging data.

In a further example, as shown in Fig. 6B, the transflective optical mirror 44 is provided as an array of optical switches (46b). The optical switches 46b may be arranged between the microlens and the X-ray scintillator or integrated as a microlens module. In an example, as shown in Fig. 6B, the optical switches 46b may be arranged below all microlenses 32. This may be beneficial for a practical use for acquiring X-ray only images and optical images in room light conditions. In another example (not shown), the optical switches 46b may be arranged below a part of the microlenses. Each optical switch 46b is configured for enabling the incident optical radiation received by one or more X-ray pixels to be selectively switched-on and -off synchronously with time-interleaved X-ray and optical imaging. For example, the transflective optical mirror 44 may be a liquid crystal module, a transflective liquid crystal mirror, or a liquid crystal lens. The transflective optical mirror 44 may also be in form of a transflective optical coating. This may advantageously enable real-time imaging applications (e.g. medical imaging applications in surgical, OR/hybrid or interventional rooms). There is no need to turn off light (including room light) or to close optical shutter when acquiring the X-ray image.

The transflective optical mirror 44 may also be applied to the embodiments in Figs. 5A to 5C.

In an example, the array of optical component arrangements comprises microlenses with: i) different focal lengths, ii) different distance gaps, iii) non-uniform distribution, iv) different sizes between microlenses, and/or v) different sizes compared to that of the sensor pixel. This may advantageously create a dynamic differentiation or resolution for optical imaging.

Figs. 7A and 7B shows a schematic diagram of an imaging detector 10 according to further embodiments of the invention.

In an example, as shown in Fig. 7A, the microlenses have different focal lengths to optimize optical imaging performance. An array of microlenses with different focal lengths may advantageously enable the imaging detector to keep the focus on a series of focal lengths. Thus, the imaging detector has a series of focus distances ranging from a minimum focus distance to infinite focus distance, for example. This may be advantageously for the applications that require inspecting the whole room.

In an example, as shown in Fig. 7B, the microlenses have a size that is larger than that of the sensor pixels.

In an example (not shown), the size of the microlenses increases from center towards periphery, thereby resulting in high spatial resolution in center and low resolution at periphery.

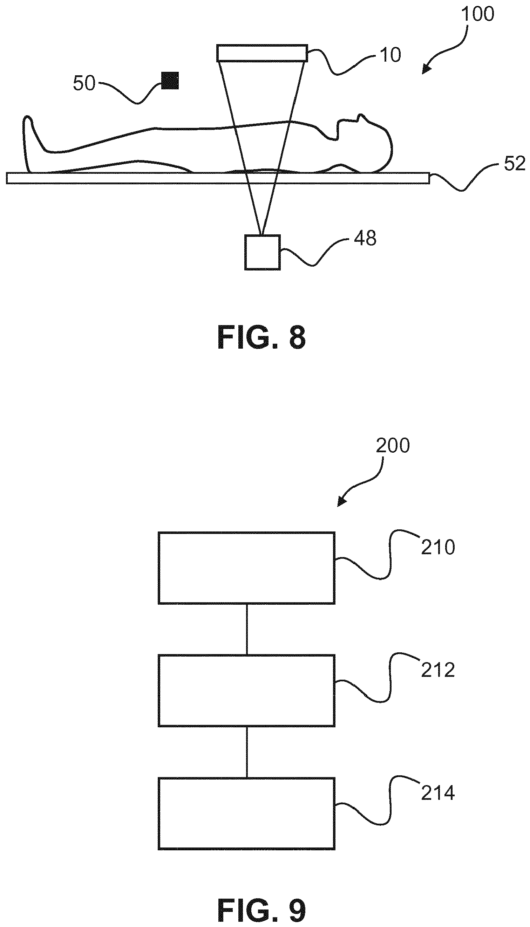

Fig. 8 shows a schematic diagram of an imaging system 100 according to an embodiment of the invention. The imaging system 100 comprises an imaging detector 10 according to one of the embodiments described above, an X-ray source 48 and an optical source 50. The X-ray source 48 is configured to provide X-ray radiation. The optical source is configured to provide optical radiation. The imaging detector 10 is configured to detect the X-ray radiation to generate X-ray imaging data and to detect the optical radiation to generate optical imaging data.

In an example, as shown in Fig. 8, the imaging system 100 is a medical imaging system. A patient support 52 may be provided to carry a patient for medical imaging. Further medical applications of the imaging system 100 may comprise: motion compensation, patient positioning, fluorescent image guided surgery, hyperspectral imaging in surgical oncology, instrument tracking, etc. The imaging system 100 may also be used for non-medical applications, such as Non Destructive Testing (NDT), food inspection and security control.

Fig. 9 shows a schematic diagram of a method 200 for fabricating an imaging detector according to an embodiment of the invention. The method comprises the following steps: In a first step 210, a substrate is formed. In a second step 212, a photosensitive sensor on the substrate. In a third step 213, an X-ray scintillator and/or an array of optical component arrangements is arranged on the photosensitive sensor and/or on the substrate layer by a pick-and-place assembly transfer process.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An imaging detector (10) for capturing optical imaging data and X-ray imaging data, comprising:
- a substrate (12);
- a photosensitive sensor (14);
- an X-ray scintillator (16); and
- an array of optical component arrangements (18);
wherein the photosensitive sensor comprises sensor pixels (20) distributed across the imaging detector;
wherein the X-ray scintillator is configured to convert energy of incident X-ray radiation (22) into optical photons;
wherein each optical component arrangement comprises at least one optical component (24) configured for directing incident optical radiation (26) towards the photosensitive sensor;
wherein the sensor pixels comprise optical pixels (28), each coupled with a respective optical component arrangement to receive the incident optical radiation, thereby generating the optical imaging data; and
wherein the sensor pixels comprise X-ray pixels (30) coupled with the X-ray scintillator to receive the converted optical photons, thereby generating the X-ray imaging data.

2. Imaging detector according to claim 1,
wherein at least one optical component arrangement comprises a light converging component (31) for focusing or narrowing the incident optical radiation onto the photosensitive sensor; and
wherein the light converging component is at least one selected from a microlens (32) and an optical collimator.

3. Imaging detector according to claim 1 or 2,
wherein the X-ray scintillator is a pixilated scintillator comprising an array of scintillator elements (34); and
wherein the array of optical component arrangements and the array of scintillator elements are positioned with respect to each other for directing the incident optical radiation:
i) to the sensor pixels within a gap (36) between the scintillator elements, thereby forming separate optical and X-ray pixels; or
ii) to the sensor pixels coupled with the X-ray scintillator, thereby forming common optical and X-ray pixels.

4. Imaging detector according to claim 3,
wherein at least one component arrangement comprises a light guide (38) arranged inside the gap between the scintillator elements, optionally combined with a light filter (40) and/or a light source (42); and
wherein the light guide is coupled with a respective light converging component for guiding the incident optical radiation towards the sensor pixels within the gap between the scintillator elements.

5. Imaging detector according to claim 4,
wherein the light converging component is a microlens; and
wherein the microlens has at least one of the following shapes and positions:
i) symmetrically shaped microlens in a symmetrical position relative to a respective light guide;
ii) symmetrically shaped microlens in an asymmetrical position relative to a respective light guide; and
iii) asymmetrically shaped microlens.

6. Imaging detector according to claim 3,
wherein the microlens is a composite microlens; and
wherein a position of the composite microlens is at least one of the following:
i) inside a gap between scintillator elements;
ii) inside a gap between trapezoid-shaped scintillator elements; and
iii) over a gap between trapezoid-shaped scintillator elements.

7. Imaging detector according to claim 3,
wherein the array of optical component arrangements and the array of scintillator elements are arranged on opposite sides of the photosensitive sensor; wherein the photosensitive sensor is photosensitive on both sides; and wherein each optical component arrangement is configured to direct the incident optical radiation towards one or more X-ray pixels coupled with a respective scintillator element; or
wherein the array of optical component arrangements and the array of scintillator elements are arranged on the same side of photosensitive sensor; wherein each optical component arrangement is configured to direct the incident optical radiation passing through a respective scintillator element towards one or more X-ray pixels; or
wherein at least one scintillator element has a surface shape that is configured in such a way that the at least one scintillator element itself acts as a microlens for optical imaging.

8. Imaging detector according to any one of claims 3 to 7,
wherein the array of scintillator elements comprises scintillator elements with:
i) different thicknesses;
ii) different sizes between scintillator elements;
iii) different sizes compared to that of the sensor pixel;
iv) different distance gaps;
v) non-uniform distribution;
vi) different radiation conversion materials; and/or
vii) different composition of radiation conversion materials; and
wherein the composition of the radiation conversion material is different at least in one of the following:
- a doping level of the radiation conversion material;
- a doping material; and
- a combination of doping material.

9. Imaging detector according to claim 1 or 2,
wherein the X-ray scintillator is a continuous scintillator comprising a radiation conversion material.

10. Image detector according to any one of claims 2 to 9;
wherein at least one microlens is configured to be an optical filter for selectively transmitting light of different wavelengths; and/or
wherein the light guide is configured to be an optical filter for selectively transmitting light of different wavelengths.

11. Imaging detector according to any one of the preceding claims,
wherein a transflective optical mirror (44) is provided;
wherein the transflective optical mirror is provided as an array of light filters (46a), each light filter configured for blocking one or more X-ray pixels from receiving the incident optical radiation; and/or
wherein the transflective optical mirror is provided as an array of optical switches (46b), each configured for enabling the incident optical radiation received by one or more X-ray pixels to be selectively switched-on and -off synchronously with time-interleaved X-ray and optical imaging.

12. Imaging detector according to any one of claims 2 to 11,
wherein the array of optical component arrangements comprises microlenses with:
i) different focal lengths;
ii) different distance gaps;
iii) non-uniform distribution;
iv) different sizes between microlenses; and/or
v) different sizes compared to that of the sensor pixel.

13. Imaging detector according to any one of the preceding claims,
wherein the substrate comprises a flat or a substantially flat or a curved shape; and
wherein the substrate comprises silicon, glass or polymer foil.

14. An imaging system (100), comprising:
- an imaging detector according claim 1;
- an X-ray source (48); and
- an optical source (50);
wherein the X-ray source is configured to provide X-ray radiation;
wherein the optical source is configured to provide optical radiation; and wherein the imaging detector is configured to detect the X-ray radiation to generate X-ray imaging data and to detect the optical radiation to generate optical imaging data.

15. A method (200) for fabricating an imaging detector, comprising the following steps:
a) forming (210) a substrate;
b) forming (212) a photosensitive sensor on the substrate; and
c) arranging (214) an X-ray scintillator and/or an array of optical component arrangements on the photosensitive sensor and/or on the substrate layer by a pick-and-place assembly transfer process.
